# EUROPÄISCHE PATENTSCHRIFT

(11) **EP 4 202 494 B1**
(45) Veröffentlichungstag und Bekanntmachung des Hinweises auf die Patenterteilung: **31.01.2024**
(21) Anmeldenummer: 21216205.1
(22) Anmeldetag: 21.12.2021
(51) Int. Cl.: G01S 17/48

(54) **OPTISCHE ERFASSUNG EINES OBJEKTS NACH DEM TRIANGULATIONSPRINZIP**
OPTICAL DETECTION OF AN OBJECT ACCORDING TO THE TRIANGULATION PRINCIPLE
DÉTECTION OPTIQUE D'UN OBJET SELON LE PRINCIPE DE TRIANGULATION

(43) Veröffentlichungstag der Anmeldung: 28.06.2023
(73) Patentinhaber: SICK AG, 79183 Waldkirch (DE)
(72) Erfinder: Merettig, Gerhard, 79350 Sexau (DE)

(56) Entgegenhaltungen:
- DE-A1- 19 721 105
- DE-A1- 19 850 270
- DE-A1-102017 106 380

## Beschreibung

Die Erfindung betrifft einen optoelektronischen Sensor nach dem Triangulationsprinzip zur Erfassung eines Objekts in einem Überwachungsbereich sowie ein Verfahren zum Erfassen eines Objekts in einem Überwachungsbereich mit optischer Triangulation nach dem Oberbegriff von Anspruch 1 beziehungsweise 14.

Bei der optischen Triangulation sind Lichtsender und Lichtempfänger nebeneinander angeordnet. Der von einem angetasteten Objekt erzeugte Empfangslichtfleck wandert in Abhängigkeit des Objektabstands auf dem Empfängerelement. Die Position des Empfangslichtflecks stellt somit ein Maß für den Objektabstand dar. Ein abstandsmessender Sensor nach dem Triangulationsprinzip gibt diesen Objektabstand als Messgröße aus.

Eine Unterklasse bilden die hintergrundausblendenden Lichttaster. Hier wird die Anwesenheit von Objekten erkannt und ein entsprechendes binäres Schaltsignal ausgegeben. Dabei wird das Triangulationsprinzip ausgenutzt, um mit einem zumindest in einen Nah- und einen Fernbereich ortsauflösenden Lichtempfänger zwei Empfangssignale zu erzeugen. Deren Differenz wird mit einer Schaltschwelle nahe oder gleich Null bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen.

Für die erforderliche Ortsauflösung sind Sensoren nach dem Triangulationsprinzip üblicherweise mit einem Zeilensensor ausgerüstet, der eine große Anzahl von Lichtempfangselementen oder Pixeln aufweist. Nach einer Belichtungszeit wird der Signalinhalt jedes Lichtempfangselements ausgelesen, verstärkt, einem ADC zugeführt und dann digital weiterverarbeitet. Nun wäre wünschenswert, die Signale mit hoher Abtastrate zu erfassen und einer Signalaufbereitung beispielsweise durch Filter zu unterziehen. Die dafür erforderlichen Bauteile und Rechenkapazitäten treiben aber die Herstellkosten in die Höhe. In kleinen Sensoren ist das schon deshalb nicht zu leisten, weil die schnellen ADCs eine zu hohe Verlustleistung erzeugen würden.

Ein beispielsweise aus DE 102 31 178 A1 bekannter Ausweg ist die Zusammenfassung von Signalen mehrerer Lichtempfangselemente. Die resultierende geringere Anzahl Verarbeitungskanäle erlaubt dann eine schnelle Abtastung beziehungsweise analoge und digitale Aufbereitung. Dies wird aber mit einem Verlust an Ortsauflösung erkauft. Die DE 102 31 178 A1 schlägt verschiedene Wege vor, die Lichtempfangselemente den Verarbeitungskanälen zuzuordnen. Letztlich bleibt sie aber die Lösung schuldig, eine hohe Ortsauflösung dort, wo sie gebraucht wird, in verschiedensten Messituationen schnell und flexibel aufrecht zu erhalten, nämlich an der aktuellen, tatsächlichen Auftreffposition des Empfangslichtflecks.

Die DE 199 62 701 A1 offenbart ein Verfahren zur Ermittlung der Position eines Lichtspots auf einer Fotodioden-Zeile. Dabei ist das Größenverhältnis zwischen Lichtspot und Fotodioden- Zellen derart gewählt, dass sich der Lichtspot zumindest über drei benachbarte Fotodioden-Zellen erstreckt. Dies ermöglicht eine Positionsbestimmung mit Subpixelauflösung. Mit Fragen der Signalaufbereitung oder Kanalzusammenfassung befasst sich das Dokument nicht.

In der EP 1 853 942 B1 wird ein Verfahren zum Betrieb eines optoelektronischen Sensors beschrieben, bei dem die Signale abgetastet und zur Störlichtunterdrückung gefiltert werden. Wie schon erläutert, ist eine solche aufwändige Verarbeitung nicht für alle Lichtempfangselemente selbst einer nur mäßig hochauflösenden Empfängerzeile zu leisten.

Aus der EP 2 390 620 B1 ist ein optoelektronischer Sensor zur Detektion von Objektkanten bekannt. Dabei werden Lichtflecken von zwei Seiten erzeugt, auf einer jeweiligen Empfängerzeile detektiert und vergleichend bewertet. Erneut wird die Signalaufbereitung oder Kanalzusammenfassung der Empfängerzeilen nicht angesprochen.

Die EP 3 379 293 B1 offenbart einen optoelektronischen Sensor, der ein schaltendes und ein messendes Prinzip kombiniert. Dafür werden zusammenfassende Verarbeitungskanäle gebildet, und zur Erzeugung eines über die Empfängerzeile ortsaufgelösten Lichtverteilungssignals wird die Zuordnung eines Verarbeitungskanals in einer Art Scanvorgang mittels Multiplexing nach und nach über die Empfängerzeile variiert. Das ist nur als gelegentliche Zusatzinformation zu der schaltenden Primärfunktion gedacht und wäre für eine eigentliche Triangulationsmessung viel zu träge. Der Scanvorgang nimmt keinerlei Rücksicht auf die tatsächliche Lage des Empfangslichtflecks, die nur im Nachhinein in langsamen Zyklen festgestellt werden kann.

Die DE 198 50 270 A1 offenbart ein Verfahren zum Betrieb eines nach dem Triangulationsprinzips arbeitenden Distanzsensors. Es wird das photoempfindliche Element einer CCD-Zeile bestimmt, das die maximale Signalamplitude liefert. Beidseits davon wird eine vorgegebene Anzahl weiterer photoempfindlicher Elemente herangezogen, der Flächeninhalt des entsprechenden Ausschnitts des Verlaufs der Signalamplitude entlang der CCD-Zeile und davon der Flächenschwerpunkt bestimmt.

Es ist daher Aufgabe der Erfindung, die Messung mit einem gattungsgemäßen Sensor weiter zu verbessern.

Diese Aufgabe wird durch einen optoelektronischen Sensor nach dem Triangulationsprinzip zur Erfassung eines Objekts in einem Überwachungsbereich sowie ein Verfahren zum Erfassen eines Objekts in einem Überwachungsbereich mit optischer Triangulation nach Anspruch 1 beziehungsweise 14 gelöst. Der Sensor ist beispielsweise ein Triangulationstaster oder ein hintergrundausblendender Lichttaster. Ein Lichtsender sendet Licht in den Überwachungsbereich, vorzugsweise einen durch eine Sendeoptik gebündelten oder kollimierten Lichtstrahl. Das nach Remission oder Reflexion von dem Objekt zurückkehrende Licht erzeugt einen Empfangslichtfleck auf einem Lichtempfänger, der eine Vielzahl von Lichtempfangselementen oder Pixeln aufweist. Dabei bilden Lichtsender und Lichtempfänger eine Triangulationsanordnung, sind also gemäß dem Triangulationsprinzip so zueinander angeordnet und ausgerichtet, dass der Empfangslichtfleck in Abhängigkeit des Abstands des angetasteten Objekts über die Lichtempfangselemente des Lichtempfängers wandert.

Eine Steuer- und Auswertungseinheit bestimmt aus den Empfangssignalen der Lichtempfangselemente den Auftreffort auf dem Lichtempfänger und gewinnt so eine Abstandsinformation. Je nach Ausführungsform des Sensors wird die Abstandsinformation als Abstandsmesswert oder beispielsweise wie in einem hintergrundausblendenden Lichttaster als Schaltsignal ausgegeben, das von dem Abstand abhängt. Es werden jeweils Gruppen von vorzugsweise zueinander benachbarten Lichtempfangselementen in einem Verarbeitungskanal zusammengefasst. Es kann dabei mindestens einen Verarbeitungskanal geben, der nur einem einzigen Lichtempfangselement zugeordnet ist. Das ist dann aber eine Ausnahme, bei der zumindest die weiteren Verarbeitungskanäle mehrere Lichtempfangselemente zusammenfassen. Es gibt in jedem Fall deutlich weniger Verarbeitungskanäle als Lichtempfangselemente, so dass ein Zusammenfassen, Binning oder Downsampling der Ortsauflösung stattfindet. Als stille Voraussetzung wird vorzugsweise noch angenommen, dass ein Lichtempfangselement höchstens einem Verarbeitungskanal zugeordnet sein darf. Umgekehrt ist aber erlaubt, dass ein Lichtempfangselement zumindest vorübergehend gar keinem Verarbeitungskanal zugeordnet ist.

Die Erfindung geht von dem Grundgedanken aus, mindestens drei Verarbeitungskanäle zu verwenden, die eine genaue Positionsbestimmung des Empfangslichtflecks ermöglichen. Einem dieser Verarbeitungskanäle, der als Zentralkanal bezeichnet wird, ist dasjenige mindestens eine Lichtempfangselement zugeordnet, auf das das Zentrum des Empfangslichtflecks fällt. Das Zentrum kann beispielsweise durch ein statistisches Maß festgelegt sein, wie dem Schwerpunkt, dem Maximum oder dem Median der Lichtverteilung über den Empfangslichtfleck in der Zeilenrichtung des Lichtempfängers. Die Lichtempfangselemente zu beiden Zeiten des Zentrums sind einem rechten beziehungsweise linken Flankenkanal zugeordnet und detektieren somit einen rechten beziehungsweise linken Teil des Empfangslichtflecks. Diese Zuordnung der drei Verarbeitungskanäle zu den Lichtempfangselementen, auf die der Empfangslichtfleck fällt, kann ein beispielsweise kalibrierter oder voreingestellter fixer Zustand des Sensors sein. Vorzugsweise handelt es sich um einen Zielzustand, der dynamisch immer wieder eingestellt oder eingeregelt wird. Die Zuordnung ist damit flexibel und anpassbar.

Die Erfindung hat den Vorteil, dass zugleich eine hohe Auflösung und eine verbesserte Störlichtunterdrückung mit reduziertem Rauschen erreicht werden kann. Wegen der Zusammenfassung in Verarbeitungskanälen können sich Lichtempfangselemente eine schnelle Abtastung sowie analoge und digitale Signalaufbereitung teilen, und für die geringe Anzahl Verarbeitungskanäle ist dies auch in vergleichsweise einfachen Sensoren aufwändig und hochwertig realisierbar. Dank der erfindungsgemäßen Zuordnung von Lichtempfangselementen zu Verarbeitungskanälen bleibt dabei Positionsbestimmung auf dem Lichtempfänger hochauflösend. Folglich wird insgesamt eine Messgenauigkeit und Störfestigkeit erreicht, die mit einem Sensor vergleichbar ist, der für sämtliche Lichtempfangselemente eine schnelle Abtastung und aufwändige Signalaufbereitung bereitstellt. Die Erfindung vermeidet jedoch die damit verbundenen Herstellkosten und technischen Nachteile, wie etwa Baugröße, Ansprechzeit oder Leistungsaufnahme.

Die Verarbeitungskanäle sind bevorzugt für eine analoge und/oder digitale Signalaufbereitung der Empfangssignale ausgebildet, insbesondere mit einem Verstärker, einem Filter für Gleichlichtanteile, einem A/D-Wandler, einem Glättungsfilter und/oder einem Frequenzfilter. Dadurch wird eine erheblich robustere Erfassung ermöglicht. Da es nur vergleichsweise wenige Verarbeitungskanäle gibt, kann ohne allzu großen Aufwand auch mit komplexeren Bausteinen gearbeitet werden. Eine beispielhafte Signalverarbeitung sieht im Analogteil eine Verstärkung, ein Herausfiltern des Gleichlichtanteils (DC) und nach A/D-Wandlung weitere digitale Filter wie einen FIR-Filter vor.

Die Steuer- und Auswertungseinheit ist bevorzugt für eine Störfilterung in mindestens einem Verarbeitungskanal ausgebildet, wobei insbesondere anhand einer Beobachtung der Störumgebung ein geeigneter Zeitpunkt für eine Signalaufnahme bestimmt wird. Die Störfilterung kann Teil der im Vorabsatz erwähnten Signalaufbereitung sein. Die Verarbeitungskanäle ermöglichen in dieser Ausführungsform, dynamische Störungen zu identifizieren, die also nur zu bestimmten Zeiten vorhanden sind. Ein typisches Beispiel ist ein baugleicher Sensor mit seinen Lichtsignalen. Durch die Beobachtung der Störumgebung kann beispielsweise eine Störsynchronisation erfolgen, durch die der Sensor solchen temporären Störungen ausweicht, indem die Signalaufnahme immer in möglichst störungsfreien Zeitintervallen erfolgt.

Die Empfangssignale der Verarbeitungskanäle sind bevorzugt analog zusammengeführt. Das entsprechende gemeinsame Empfangssignal des Verarbeitungskanals, beispielsweise ein Summensignal, kann dann durch Bauteile verarbeitet werden, die nur einmal pro Verarbeitungskanal benötigt werden, beispielsweise Verstärker, analoge Filter oder ADCs. Dadurch können hochwertige Bauteile verwendet werden, ohne dabei die Herstellkosten, den Bauraum- oder Flächenbedarf oder die Leistungsaufnahme über Gebühr zu verschlechtern.

Der Zentralkanal weist bevorzugt die höchste Auflösung auf. Die Auflösung korrespondiert mit der Gruppengröße. Je weniger Lichtempfangselemente einem Verarbeitungskanal zugeordnet sind, desto weniger Ortsauflösung geht durch die Zusammenfassung in diesem Verarbeitungskanal verloren. Die höchste Auflösung des Zentralkanals kann relativ verstanden werden, es gibt dann keinen anderen Verarbeitungskanal mit geringerer Gruppengröße. Sie kann aber auch absolut verstanden werden, indem die dem Zentralkanal zugeordnete Gruppe von Lichtempfangselementen nur ein einziges Lichtempfangselement aufweist. Das ist die höchstmögliche Auflösung, die der Lichtempfänger leisten kann, wobei eine algorithmische Auflösungserhöhung noch denkbar bleibt. Damit findet in dem Zentralkanal ausnahmsweise keine echte Zusammenfassung statt. Der Zentralkanal ermöglicht in jedem Fall, seine Verarbeitungskapazität, beispielsweise hohe Abtastrate oder Signalaufbereitung, flexibel einem beliebigen Lichtempfangselement zuzuordnen. Erfindungsgemäß ist das dasjenige für eine Triangulation besonders wichtige Lichtempfangselement, auf das das Zentrum des Empfangslichtflecks fällt.

Die dem Zentralkanal und den Flankenkanälen zugeordneten Lichtempfangselemente decken den Empfangslichtfleck vollständig und genau ab. Zentralkanal und Flankenkanäle gemeinsam sind damit sämtliche Lichtempfangselemente zugeordnet, die einen Teil des Empfangslichtflecks detektieren. Der Empfangslichtfleck wird in diesen drei Kanälen vollständig erfasst. Die vollständige Abdeckung ist zunächst im Sinne einer hinreichenden Bedingung gemeint, jedes Lichtempfangselement, das einen Teil des Empfangslichtflecks registriert, ist einem dieser drei Kanäle zugeordnet. Erfindungsgemäß ist die Abdeckung auch im Sinne einer notwendigen Bedingung gemeint. Der Empfangslichtfleck wird dann durch die den drei Kanälen zugeordneten Lichtempfangselemente genau abgedeckt, kein Lichtempfangselement, das den drei Kanälen zugeordnet ist, empfängt lediglich Hintergrundlicht. Die dafür notwendige Anzahl abzudeckender Lichtempfangselemente kann vorab festgelegt oder dynamisch bestimmt sein. Der Empfangslichtfleck ist im Nahbereich eines angetasteten Objekts breiter als im Fernbereich. Eine Abdeckung des Empfangslichtflecks im Sinne einer hinreichenden Bedingung ist also durch eine konstante Festlegung auf den Nahbereich möglich. Außerdem ist die Beziehung der Empfangslichtfleck Breite in Abhängigkeit vom Abstand durch den Sensor, dessen Aufbau und Optiken bestimmt und somit vorab bekannt oder kalibrierbar, so dass auch eine genaue Abdeckung durch eine fixe, nun abstandsabhängige Festlegung der Zuordnung möglich ist. Alternativ können in einer dynamischen Zuordnung testweise Lichtempfangselemente zu einem Flankenkanal hinzugefügt oder dort weggenommen werden. Ob dabei ein Lichtempfangselement beteiligt ist, auf das der Empfangslichtfleck fällt, lässt sich durch Vergleich mit dem Hintergrundpegel feststellen.

Die Steuer- und Auswertungseinheit ist bevorzugt dafür ausgebildet, den Zentralkanal und die Flankenkanäle zum Empfangslichtfleck auszurichten, indem ein Pegel des linken Flankenkanals und des rechten Flankenkanals verglichen wird und im Falle eines über eine Toleranzschwelle hinausgehenden Unterschieds der Zentralkanal und die Flankenkanäle in Richtung des kleineren Pegels verschoben werden. Bildlich gesprochen werden die Flankenkanäle durch Verschieben der drei Verarbeitungskanäle relativ zu dem Lichtempfänger ausbalanciert, um den Zentralkanal im Zentrum des Empfangslichtflecks zu halten. Sofern die beiden Flankenkanäle nicht gleich breit sind, ihnen also eine unterschiedliche Anzahl Lichtempfangselemente zugeordnet ist, kann dies vorzugsweise aus den Pegeln herausgerechnet werden. Bei einer ausgleichenden Verschiebung wird den Verarbeitungskanälen in Verschiebungsrichtung mindestens ein Lichtempfangselement hinzugefügt und gegen die Verschiebungsrichtung mindestens ein Lichtempfangselement weggenommen.

Die Steuer- und Auswertungseinheit ist bevorzugt dafür ausgebildet, um eine konstante Anzahl von Lichtempfangselementen zu verschieben. Die konstante Anzahl beträgt mindestens eins und ist vorzugsweise höchstens so groß wie die Gruppengröße der drei Verarbeitungskanäle, weil sonst der Empfangslichtfleck oder jedenfalls dessen Zentrierung womöglich verloren wird. Das ist eine sehr einfache Vorschrift, die aber in der Praxis oft schon ausreicht, um die Verarbeitungskanäle zum Empfangslichtfleck auszurichten.

Die Steuer- und Auswertungseinheit ist bevorzugt dafür ausgebildet, um eine Anzahl von Lichtempfangselementen zu verschieben, die vom Verhältnis oder Unterschied des Pegels des linken Flankenkanals zu dem Pegel des rechten Flankenkanals abhängt. Das Verhältnis der Pegel zueinander oder deren Unterschied sind ein Maß dafür, wie stark der Empfangslichtfleck gegenüber der gewünschten Ausrichtung Verarbeitungskanälen noch dezentriert ist. Daher kann es sinnvoll sein, die Verschiebung von diesem Maß abhängig zu machen, um die gewünschte Ausrichtung in weniger Schritten zu erreichen.

Die Steuer- und Auswertungseinheit ist bevorzugt dafür ausgebildet, das Ausrichten zu iterieren. Nach einem einzelnen Verschiebungsschritt gibt es möglicherweise immer noch einen Pegelunterschied zwischen dem linken und rechten Flankenkanal. Durch Iteration lässt sich dann das Ausrichten vollenden. Mit Iteration sind hier vorzugsweise komplexere Algorithmen umfasst, die beispielsweise die Schrittweite kleiner werden lassen oder mit sonstigen an sich aus der Regelungstechnik bekannten Verfahren dafür sorgen, dass die drei Verarbeitungskanäle zu einem auch wandernden oder springenden Empfangslichtfleck ausgerichtet werden beziehungsweise bleiben.

Vorzugsweise ist mindestens ein weiterer Verarbeitungskanal vorgesehen, nämlich ein Hintergrundkanal, auf dessen zugeordnete Gruppe von Lichtempfangselementen der Empfangslichtfleck nicht fällt. Zwar ist die Informationen über den Empfangslichtfleck für eine Triangulation besonders wichtig, dennoch kann es vorteilhaft sein, den Hintergrund zu vermessen. Daraus können Korrekturen abgeleitet werden, und es kann besonders vorteilhaft festgestellt werden, wenn es mehrere Empfangslichtflecken gibt oder der Empfangslichtfleck aus den Lichtempfangselementen herausgelaufen ist, die den Zentralkanal und den Flankenkanälen zugeordnet sind.

Vorteilhafterweise ist mindestens je ein Hintergrundkanal für einen Nahbereich und einen Fernbereich des Lichtempfängers vorgesehen. Der Hintergrund wird somit an mehreren Stellen vermessen, wobei im Nahbereich und Fernbereich durchaus relevante Unterschiede vorhanden sein können.

Die Steuer- und Auswertungseinheit ist bevorzugt für eine Neuaufteilung der Verarbeitungskanäle ausgebildet, in der zunächst unabhängig von einer Kenntnis der Lage des Empfangslichtflecks auf dem Lichtempfänger Gruppen von Lichtempfangselementen über einen Bereich des Lichtempfängers einem jeweiligen Verarbeitungskanal zugeordnet werden. Beispielsweise beim Einschalten des Sensors oder wenn ein neues Objekt in den Überwachungsbereich tritt, fehlt eine Information, wo sich der Empfangslichtfleck befindet. Damit können Zentralkanal und Flankenkanäle noch nicht zugeordnet werden. Für eine initiale Suche nach dem Empfangslichtfleck werden die Lichtempfangselemente auf die verfügbaren Verarbeitungskanäle verteilt, beispielsweise der Lichtempfänger in gleich breite Abschnitte unterteilt. Es ist denkbar, dass es eine Vorinformation über eine vermutete odertatsächliche Position des Empfangslichtflecks gibt. Dann können die Verarbeitungskanäle nur über einen entsprechenden Bereich des Lichtempfängers verteilt werden. Diese Vorinformation kann beispielsweise eine frühere Messung oder ein bestimmter Arbeitsbereich sein. Ein unten noch genauer betrachteter Sonderfall ist, dass der Empfangslichtfleck in Lichtempfangselemente gewandert ist, die einem Hintergrundkanal zugeordnet sind. In diesem Fall können die Lichtempfangselemente des Hintergrundkanals und nicht sämtliche Lichtempfangselemente auf die verfügbaren Verarbeitungskanäle aufgeteilt werden, um den Empfangslichtfleck genauer zu lokalisieren.

Die Steuer- und Auswertungseinheit ist bevorzugt dafür ausgebildet, mittels der neu aufgeteilten Verarbeitungskanäle eine Positionsbestimmung des Empfangslichtflecks vorzunehmen und damit zumindest den Zentralkanal und die Flankenkanäle zu initialisieren. Mit den Verarbeitungskanälen gemäß der Neuaufteilung kann die Position des Empfangslichtflecks zumindest grob geschätzt werden. Dazu wird beispielsweise ein Median, ein Maximum, ein Schwerpunkt oder ein sonstiges statistisches Maß über die Pegel in den Verarbeitungskanälen bestimmt. Beispielsweise wird dann das auf diese Weise gefundene mindestens eine Lichtempfangselement vorläufig dem Zentralkanal zugeordnet, die Nachbarn zu beiden Seiten den Flankenkanälen und übrige Lichtempfangselemente dem mindestens einen Hintergrundkanal, sofern vorhanden. Damit ist eine verbesserte Anfangskonfiguration gefunden, aus der durch das oben beschriebene Ausbalancieren anhand der Pegel in den Flankenkanälen, gegebenenfalls nach Iteration, eine Ausrichtung der Verarbeitungskanäle bezüglich des Empfangslichtflecks vorgenommen werden kann.

Die Steuer- und Auswertungseinheit ist bevorzugt dafür ausgebildet, die Pegel in dem Zentralkanal und den Flankenkanälen einerseits und die Pegel in dem mindestens einen Hintergrundkanal andererseits zu vergleichen, um festzustellen, ob der Empfangslichtfleck in den Hintergrundkanal gewandert ist, und gegebenenfalls eine Neuaufteilung der Verarbeitungskanäle vorzunehmen. Solange Zentralkanal und Flankenkanäle zum Empfangslichtfleck richtig ausgerichtet sind, bleibt der Pegel in dem mindestens einen Hintergrundkanal auf einem Rauschniveau entsprechend dem Umgebungs- oder Hintergrundlicht. Sobald in dem Hintergrundkanal deutlich mehr Licht registriert wird, und dies womöglich bei gleichzeitigem Pegelverlust in Zentralkanal und/oder Flankenkanälen, wird angenommen, dass der Empfangslichtfleck aus dem Regelungsbereich herausgelaufen ist, in dem die Ausrichtung durch Balancieren gehalten werden kann. Beispielsweise ist dann ein neues Objekt in einem anderen Abstand in den Überwachungsbereich eingetreten. Um den Empfangslichtfleck wiederzufinden, kann nun der Hintergrundkanal aufgeteilt werden, wie dies im Vorabsatz beschrieben wurde.

In einigen Ausführungsformen, insbesondere in den letzten beiden Absätzen, werden vorläufige Messwerte erzeugt, bei denen Zentralkanal und Flankenkanäle noch nicht optimal zum Empfangslichtfleck ausgerichtet sind. Solche Messwerte können bereits ausgegeben werden, um für eine besonders kurze Ansprechzeit beispielsweise bei Einsatz des Sensors in einem schnellen Regelkreis zu sorgen. Diese Messwerte sind möglicherweise noch unpräzise, stehen dafür aber sehr schnell zur Verfügung. Alternativ kann die Messwertausgabe vorübergehend ausgesetzt werden, damit nur genaue Messwerte nach Ausrichtung von Zentralkanal und Flankenkanälen ausgegeben werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors in Triangulationsanordnung;
- Fig. 2: eine schematische Draufsicht auf einen Lichtempfänger mit zeilenförmig angeordneten Lichtempfangselementen und einen davon detektierten Empfangslichtfleck;
- Fig. 3: eine Darstellung der Pegel in mehreren, hier sechs Verarbeitungskanälen, auf die die Lichtempfangselemente eines Lichtempfängers aufgeteilt sind, wobei in diesem Beispiel der Empfangslichtfleck mittig von einem sehr schmalen Zentralkanal und zwei Flankenkanälen untereinander ausbalancierten Pegels erfasst wird;
- Fig. 4: eine Darstellung ähnlich Figur 3, wobei sich nun die Ausrichtung nach rechts verschoben hat;
- Fig. 5: eine Darstellung ähnlich Figur 4 nach einem Korrekturschritt, der den Zentralkanal und die Flankenkanäle wieder zum Empfangslichtfleck ausrichtet;
- Fig. 6: eine Darstellung des Pegels in einem Hintergrundkanal, nachdem der Empfangslichtfleck aus dem Zentralkanal und den Flankenkanälen gemäß den Figuren 3-5 herausgelaufen ist;
- Fig. 7: eine Darstellung ausgehend von Figur 6, in der mehrere, hier sechs Verarbeitungskanäle sich den vormaligen Hintergrundkanal neu aufteilen;
- Fig. 8: eine Darstellung ähnlich Figur 3, in der Zentralkanal und Flankenkanäle durch Auswertung der Verarbeitungskanäle gemäß Figur 7 neu festgelegt und grob zum Empfangslichtfleck ausgerichtet sind; und
- Fig. 9: eine Darstellung ähnlich Figur 8 nach einem Korrekturschritt in Analogie zu Figur 4, der den Zentralkanal und die Flankenkanäle nun mittig zum Empfangslichtfleck ausrichtet.

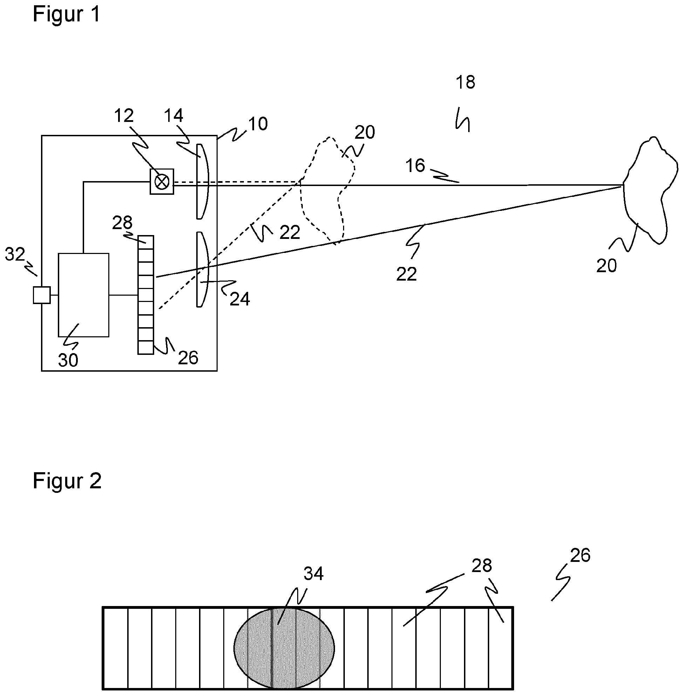

Figur 1 zeigt eine schematische Schnittdarstellung eines Sensors 10 in Triangulationsanordnung. Ein typisches, aber nicht einschränkendes Anwendungsbeispiel ist die schnelle Objekt- und Kantendetektion bei seitlich einfahrenden Objekten beispielsweise an einem Förderband. Der Sensor 10 kann ein Triangulationstaster sein, der Abstände misst und ausgibt, ein weiteres Beispiel ist ein hintergrundausblendender Lichttaster wie einleitend kurz erläutert, der ein Schaltsignal entsprechend der Anwesenheit oder Abwesenheit eines Objekts in einem bestimmten Abstandsbereich ausgibt und Objekte außerhalb dieses Entfernungsbereichs als Hintergrundsignal ausblendet. Für einen hintergrundausblendenden Lichttaster ist die Erfindung besonders vorteilhaft, um den Schaltabstand einzustellen.

Ein Lichtsender 12 sendet über eine strahlformende Sendeoptik 14 einen Lichtstrahl 16 in einen Überwachungsbereich 18 aus. Fällt der Lichtstrahl 16 auf ein Objekt 20, so gelangt ein Teil des Sendelichts als remittierter oder reflektierter Lichtstrahl 22 zurück zu dem Sensor 10. Eine Empfangsoptik 24 fängt diesen remittierten Lichtstrahl 22 auf und leitet ihn auf einen Lichtempfänger 26, wo das einfallende Licht in ein elektrisches Empfangssignal umgewandelt wird. Der Lichtempfänger 26 weist eine Vielzahl von Pixeln oder Lichtempfangselementen 28 auf, insbesondere Photodioden, beispielsweise eine Anzahl von 64 bis 512 Pixel. Die Lichtempfangselemente 28 bilden eine Zeilenanordnung. Es können mehrere Zeilen vorgesehen oder Zeilen aus einer Matrixanordnung verwendet werden.

Aufgrund der Triangulationsanordnung, in der Ausführungsform nach Figur 1 des Versatzes zwischen Lichtsender 12 mit Sendeoptik 14 gegenüber dem Lichtempfänger 26 mit Empfangsoptik 24 und wegen der Anordnung der Lichtempfangselemente 28 längs der Querverbindung zwischen Lichtsender 12 und Lichtempfänger 26 fällt der remittierte Lichtstrahl 22 eines mit gestrichelten Linien dargestellten nahen Objekts 20 auf andere Lichtempfangselemente 28, in Figur 1 weiter unten, als der remittierte Lichtstrahl 22 eines mit durchgezogenen Linien dargestellten fernen Objekts 20. Die Position des Empfangslichtflecks, auch dessen Ablage, Offset oder Displacement genannt, die sich darin niederschlägt, welches oder welche der Lichtempfangselemente 28 den Empfangslichtfleck erfasst, ist daher ein Maß für den Abstand des Objekts 20.

Eine Steuer- und Auswertungseinheit 30 ist mit dem Lichtsender 12 zu dessen Ansteuerung und mit dem Lichtempfänger 26 verbunden, um die elektrischen Empfangssignale der Lichtempfangselemente 28 weiter auszuwerten. Dabei wird die Position eines Empfangslichtflecks auf dem Lichtempfänger 26 und daraus ein Abstandswert bestimmt. Der Abstandswert kann an einer Schnittstelle 32 ausgegeben werden, wobei eine digitale Schnittstelle wie IO-Link oder eine einfache analoge Schnittstelle wie ein 4-20mA-Stromausgang denkbar sind. Alternativ oder zusätzlich wird je nach Anwesenheit oder Abwesenheit eines Objekts 20 in einem Abstand, der einem Vordergrundbereich entspricht, ein Schaltsignal ausgegeben.

Für die Auswertung der Empfangssignale werden Lichtempfangselemente 28 gruppenweise in Verarbeitungskanälen zusammengefasst oder zusammengeschaltet. In den Verarbeitungskanälen findet insbesondere eine Abtastung oder AD-Wandlung statt, zudem sind analoge und/oder digitale Vorverarbeitungen möglich, wie Verstärkung, Filterung, Rausch- und Hintergrundunterdrückung und dergleichen. Es gibt nur wenige Verarbeitungskanäle, in einer Ausführungsform sind es nur drei Verarbeitungskanäle, in anderen Ausführungsformen kommen ein Hintergrundkanal oder einige Hintergrundkanäle hinzu. Die Zahl der Verarbeitungskanäle bleibt damit vorzugsweise bei vier bis sechs oder acht, höchstens zehn und nochmals bevorzugt um einen Faktor von zehn oder mehr unterhalb der Anzahl der Lichtempfangselemente 28.

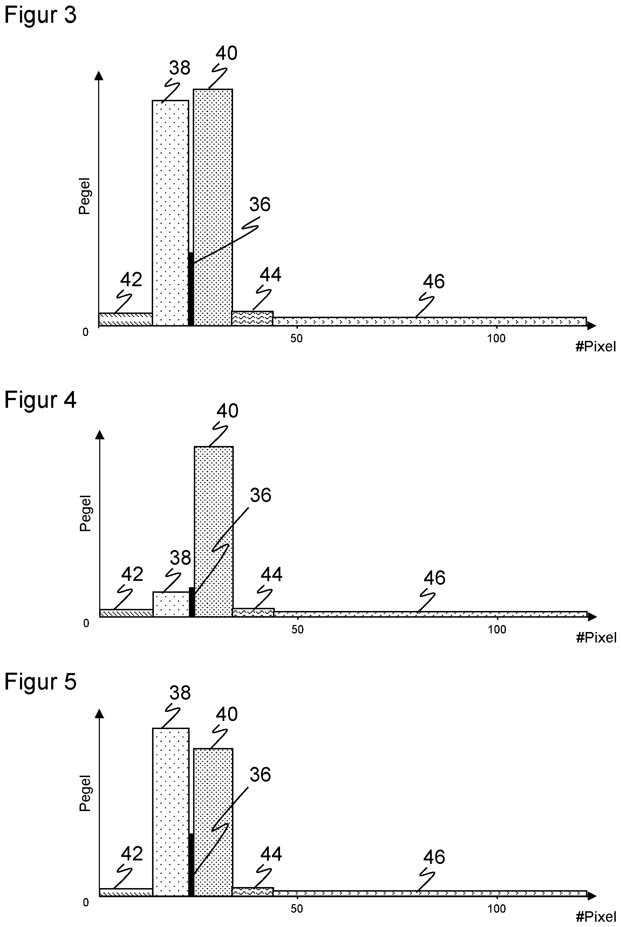

Figur 2 zeigt eine schematische Draufsicht des Lichtempfängers 26. Gegenüber der Figur 1 ist der Lichtempfänger 26 aus der Papierebene heraus und zudem innerhalb der Papierebene um 90° mit dem Uhrzeigersinn gedreht. Der remittierte Lichtstrahl 22 erzeugt einen Empfangslichtfleck 34, der auf einige der Lichtempfangselemente 28 fällt. Die Zuordnung der Lichtempfangselemente 28 zu Verarbeitungskanälen wird erfindungsgemäß so gewählt und angepasst, dass die Position des Empfangslichtflecks 34 mit wenigen Verarbeitungskanälen genau erfasst werden kann. Diese Kanalaufteilung wird nun unter Bezugnahme auf die Figuren 3 bis 9 näher erläutert.

Figur 3 zeigt eine Aufteilung der Empfangskanäle, die auf die Lage des Empfangslichtflecks 34 ausgerichtet ist. Rein beispielhaft gibt es insgesamt sechs Verarbeitungskanäle. Auf der X-Achse sind die Lichtempfangselemente 28 oder Pixel gemäß ihrer Position auf dem Lichtempfänger 26 aufgetragen, auf der Y-Achse die Energie oder der Pegel in dem jeweiligen Verarbeitungskanal in beliebiger Einheit, wobei dies praktisch beispielsweise durch eine Spannung oder einen Strom gemessen wird.

Einem Zentralkanal 36 ist dasjenige Lichtempfangselement 28 zugeordnet, auf das ein Zentrum des Empfangslichtflecks 34 fällt. Dieses Zentrum kann durch ein statistisches Maß definiert werden, beispielsweise einen Schwerpunkt, einen Median oder ein Maximum der Lichtverteilung über den Empfangslichtfleck 34 in Zeilenrichtung des Lichtempfängers 26. Die Lage des Zentrums soll vorzugsweise besonders genau bestimmt sein, daher ist der Zentralkanal 36 schmal, umfasst bevorzugt nur ein einziges Lichtempfangselement 28. Der Pegel im Zentralkanal 36 ist vergleichsweise gering. Das liegt daran, dass zum Zentralkanal 36 nur wenige Lichtempfangselemente 28 oder sogar nur ein einziges Lichtempfangselement 28 beitragen.

Zu beiden Seiten des Zentralkanals 36 sind ein linker Flankenkanal 38 und ein rechter Flankenkanal 40 vorgesehen. Den Flankenkanälen 38, 40 sind diejenigen Lichtempfangselemente 28 zugeordnet, die den Teil des Empfangslichtflecks 34 links beziehungsweise rechts vom Zentrum erfassen. Diese Zuordnung ist in dem Sinne vollständig, dass Zentralkanal 36 und Flankenkanäle 38, 40 den gesamten Empfangslichtfleck 34 erfassen. Somit geht kein Nutzlicht verloren. Erfindungsgemäß wird genau der Empfangslichtfleck 34 abgedeckt, d.h. den Flankenkanälen ist zudem kein Lichtempfangselement 28 zugeordnet, auf das der Empfangslichtfleck 34 nicht fällt. Dadurch wird das Rauschen begrenzt, denn Lichtempfangselemente 28 außerhalb des Empfangslichtflecks 34 würden nur Hintergrundlicht beitragen. Die Breite der Flankenkanäle 38, 40, also die Anzahl jeweils zugeordneter Lichtempfangselemente 28, kann als Konstante vorgegeben sein. Alternativ hängt die Breite von der Position auf dem Lichtempfänger 26 ab, um den Effekt auszugleichen, dass der Empfangslichtfleck 34 von einem Objekt 20 im Nahbereich größer ist als im Fernbereich. Dieser erwartete Durchmesser des Empfangslichtflecks 34 je nach Objektabstand lässt sich für den Gerätetyp des Sensors 10 vorab berechnen, simulieren oder kalibrieren. Nochmals alternativ kann die Breite dynamisch an den tatsächlichen Empfangslichtfleck 34 angepasst werden. Vorzugsweise sind die Flankenkanäle 38, 40 gleich breit, umfassen also eine gleiche Anzahl von Lichtempfangselementen 28. Das kann auch von der Definition des Zentrums abhängen, wenn dies beispielsweise ein 25%-Quantil ist, werden die Flanken unterschiedlich breit.

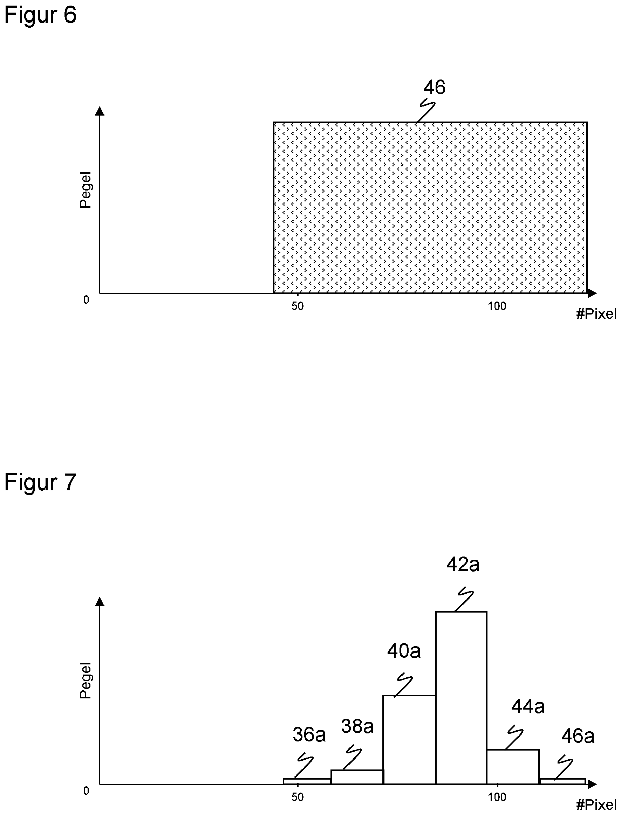

Die übrigen Lichtempfangselemente 28 messen nur den Hintergrund und sind auf die weiteren Verarbeitungskanäle aufgeteilt. In der Darstellung der Figur 3 gibt es rein beispielhaft zu beiden Seiten von Zentralkanal 36 und Flankenkanälen 38, 40 jeweils einen Hintergrundkanal 42, 44 für den Nahbereich und einen Hintergrundkanal 46 für den Fernbereich. Der Hintergrund kann bei der weiteren Auswertung berücksichtigt werden. Sofern in einem Hintergrundkanal 42, 44, 46 ein starker Pegel gemessen wird, ist möglicherweise der Empfangslichtfleck 34 fortgewandert und eine Neuaufteilung der Verarbeitungskanäle erforderlich, wie später unter Bezugnahme auf die Figuren 6 bis 9 erläutert.

In der gezeigten ausgerichteten Situation kann nun anhand der Lichtempfangselemente 28, die Zentralkanal 36 und Flankenkanälen 38, 40 zugeordnet sind, sowie der in diesen Verarbeitungskanälen 36, 38, 40 gemessenen Pegel die Position des Empfangslichtflecks 34 bestimmt werden. Eine schon recht genaue Abschätzung dieser Position bietet schlicht die Identität des Lichtempfangselements 28, das dem Zentralkanal 36 zugeordnet ist. Eine etwas aufwändigere Auswertung, wie sie beispielsweise in der einleitend genannten DE 199 62 701 A1 beschrieben wird, ermöglicht eine noch genauere Positionsbestimmung mit Subpixelauflösung, also sogar mit einer höheren Genauigkeit als der Ausdehnung eines einzelnen Lichtempfangselements 28 in Zeilenrichtung.

Figur 4 zeigt in einer Darstellung ähnlich Figur 3 eine Situation, in der der Empfangslichtfleck 34 etwas nach rechts ausgewandert ist, das Objekt 20 also nun einen etwas grö-βeren Abstand aufweist. Zentralkanal 36 und Flankenkanäle 38, 40 erfassen zwar gemeinsam noch den Empfangslichtfleck 34, aber das Zentrum des Empfangslichtflecks 34 liegt nicht mehr auf dem Lichtempfangselement 28 des Zentralkanals 36. Die Steuer- und Auswertungseinheit 30 kann dies feststellen, weil der Pegel im rechten Flankenkanal 40 deutlich höher ist als im linken Flankenkanal 38. Zu einem gewissen Grad war dies auch schon in der Situation der Figur 3 der Fall, was dort aber allein dem Diskretisierungseffekt aufgrund der endlichen Ausdehnung der Lichtempfangselemente 28 geschuldet war. In der Situation der Figur 4 ist der Unterschied größer geworden als eine Toleranz, und daran kann die Verschiebung des Empfangslichtflecks 32 erkannt werden.

Um das Zentrum des Empfangslichtflecks 34 wieder dem Zentralkanal 36 zuzuordnen, werden die Verarbeitungskanäle 36, 38, 40 verschoben, ihnen also andere Lichtempfangselemente etwas weiter rechts oder links zugeordnet. Anschaulich werden dazu die Pegel in den Flankenkanälen 38, 40 ausbalanciert. In einem Schritt kann um ein Lichtempfangselement 28 oder um mehrere Lichtempfangselemente 28 verschoben werden. Es sollten nicht mehr Lichtempfangselemente 28 sein als die Breite der Flankenkanäle 38, 40, da sonst das Zentrum und womöglich der gesamte Empfangslichtfleck 34 verfehlt wird. Die Größe des Verschiebungsschritts kann von dem Unterschied im Pegel der beiden Flankenkanäle 38, 40 oder dem Verhältnis abhängig gemacht werden. Es ist denkbar, Verschiebungsschritte zu iterieren oder eine Art Regelung zu implementieren, die den Zentralkanal 36 auf demjenigen Lichtempfangselement 28 hält, auf das das Zentrum des Empfangslichtflecks 34 fällt.

Figur 6 zeigt eine Situation, in der der Empfangslichtfleck 34 vollständig aus dem Zentralkanal 36 und den Flankenkanälen 38, 40 herausgewandert ist. Beispielsweise ist ein neues Objekt 20 in einem anderen Abstand in den Überwachungsbereich 18 eingetreten. Dies ist übertrieben dargestellt, als würde ausschließlich noch im Hintergrundkanal 46 Licht empfangen. In der Realität würden die übrigen Verarbeitungskanäle zumindest noch ein Rauschsignal erzeugen. Jedenfalls kann die Steuer- und Auswertungseinheit 30 anhand eines Pegelvergleichs erkennen, dass die Hauptlichtmenge nun an einer anderen Position empfangen wird, sich der Empfangslichtfleck 34 somit in einer neuen Position befindet und eine Neuaufteilung der Verarbeitungskanäle erforderlich ist.

Um den Empfangslichtfleck 34 innerhalb der in dem Hintergrundkanal 46 zusammengefassten Lichtempfangselemente 28 zu lokalisieren, wird der Hintergrundkanal 46 neu und feiner aufgelöst. Die Lichtempfangselemente 28 des bisherigen Hintergrundkanals 46 werden dafür neu auf die verfügbare Verarbeitungskanäle aufgeteilt.

Figur 7 zeigt das Ergebnis einer Signalaufnahme nach einer beispielhaften gleichmäßigen Neuaufteilung. Statt einer gleichmäßigen Aufteilung könnte eine andere Aufteilung gewählt werden, beispielsweise der zugeordnete Abstandsbereich gleichmäßig aufgeteilt werden, was dann zu unterschiedlichen Breiten der Verarbeitungskanäle führen würde. Die Verarbeitungskanäle 36a, 38a, 40a, 42a, 44a, 46a haben ein neues Bezugszeichen mit hinzugefügtem Buchstaben erhalten und sind nicht gemustert, weil sie sich lediglich den früheren Hintergrundkanal 46 aufteilen und ihre bisherige Bedeutung noch nicht wiedererlangt haben.

Mit den Pegeln in den Verarbeitungskanälen 36a, 38a, 40a, 42a, 44a, 46a kann die Position des Empfangslichtflecks 34 bereits abgeschätzt werden, indem beispielsweise das statistische Maß für das Zentrum berechnet wird. In der Situation der Figur 7 muss das Zentrum irgendwo im linken Teil des Verarbeitungskanals 42a liegen. Damit ist bereits eine grobe Abstandsschätzung möglich.

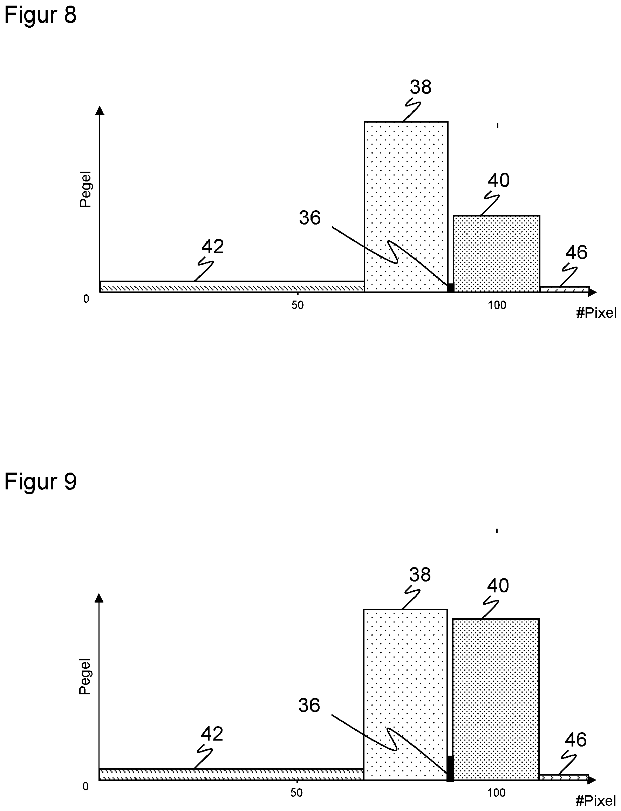

Figur 8 zeigt eine Aufteilung der Verarbeitungskanäle nach Auswertung der Signalaufnahme gemäß Figur 7. Die Verarbeitungskanäle haben ihre Bedeutung bereits wiedererlangt und sind dementsprechend gemustert und mit Bezugszeichen versehen. Da sich der Empfangslichtfleck 34 im Fernbereich befindet, wurde der Hintergrundkanal 44 weggelassen. Das illustriert auch nochmals, dass die Anzahl Hintergrundkanäle beispielhaft zu verstehen ist. Prinzipiell könnten im Übrigen auch die Flankenkanäle 38, 40 nochmals unterteilt werden, aber dadurch wird für eine präzise Positionsbestimmung nichts gewonnen, so dass es bevorzugt bei je genau einem linken Flankenkanal 38 und rechten Flankenkanal 40 bleibt.

Allerdings liegt der Zentralkanal 36 noch etwas zu weit rechts, was sich daran erkennen lässt, dass die Pegel in den Flankenkanälen 38, 40 noch nicht ausbalanciert sind. Mit diesem Zwischenergebnis kann dennoch die erste grobe Abstandsschätzung schon deutlich verbessert werden. Auch ist der Empfangslichtfleck 34 grundsätzlich wiedergefunden, es fehlt lediglich noch eine Feinausrichtung analog zu den Erläuterungen zu Figur 4 und 5. Das kann so ausgedrückt werden, dass das System durch eine Neuinitialisierung wieder in den Regelungsbereich gebracht wurde, wobei die Neuinitialisierung sich auf den Bereich des früheren Hintergrundkanals 46 beschränkt.

Figur 9 zeigt nochmals den eingeregelten Zustand, nachdem durch eine oder mehrere iterierte Verschiebungen von Zentralkanal 36 und Flankenkanälen 38, 40 die Zuordnung des Zentralkanals 36 zu dem Lichtempfangselement 28, auf das das Zentrum des Empfangslichtflecks 34 fällt, wieder hergestellt ist. Der Abstandswert kann jetzt genau ausgegeben werden.

Analog zu dem beschriebenen Wiederfinden des Empfangslichtflecks 34 in dem vormaligen Hintergrundkanal 46 kann der Empfangslichtfleck 34 anfangs, beispielsweise beim Einschalten des Sensors 10, gefunden werden. Die Verarbeitungskanäle teilen sich dann sämtliche Lichtempfangselemente 28 oder einen Arbeitsbereich auf, ansonsten ist der Ablauf wie beschrieben.

Selbst im noch nicht ausgerichteten Zustand beziehungsweise während des Ausrichtens können erfindungsgemäß sehr schnell neue, womöglich noch etwas ungenaue Messwerte zur Verfügung gestellt werden. Je nach Ausführungsform werden diese Abstandswerte direkt ausgegeben, um kurze Ansprechzeiten zu erreichen. Es können aber auch mehrere der zuletzt bestimmten Abstandswerte bewertet werden, und eine Änderung des Ausgabewerts erfolgt nur dadurch bedingt, beispielsweise durch eine Mehrheitsentscheidung oder Mittelwertbildung. In einem konkreten Beispiel könnte bei einer Bewertung der letzten sechs Messergebnisse nur dann eine Ausgabeänderung erfolgen, wenn mindestens zwei Messergebnisse größer oder kleiner als der aktuelle Ausgabewert sind. Dadurch können einzelne Messfehler, verursacht beispielsweise durch eine EMV-Störung, ein Blitzlicht oder eine Fliege im Lichtstrahl, vermieden werden.

## Patentansprüche

1. Optoelektronischer Sensor (10) nach dem Triangulationsprinzip zur Erfassung eines Objekts (20) in einem Überwachungsbereich (18), der einen Lichtsender (12) zum Aussenden von Licht (16) in den Überwachungsbereich (18), einen Lichtempfänger (26) mit einer Vielzahl von zu einer Zeile angeordneten Lichtempfangselementen (28) zum Erzeugen eines jeweiligen Empfangssignals aus einem Empfangslichtfleck (34), den das an dem Objekt (20) remittierte Licht (22) auf dem Lichtempfänger (26) erzeugt, wobei Lichtsender (12) und Lichtempfänger (26) eine Triangulationsanordnung bilden, sowie eine Steuer- und Auswertungseinheit (30) aufweist, die dafür ausgebildet ist, den Auftreffort des Empfangslichtflecks (34) auf dem Lichtempfänger (26) und daraus eine Abstandsinformation zu bestimmen, wobei die Steuer- und Auswertungseinheit (30) mindestens drei Verarbeitungskanäle aufweist, in denen jeweils Empfangssignale von einer Gruppe von Lichtempfangselementen (28) zusammengefasst werden, um den Auftreffort anhand der in den Verarbeitungskanälen gemessenen Pegel zu bestimmen, mit einem Zentralkanal (36), auf dessen zugeordnete Gruppe von Lichtempfangselementen (28) das Zentrum des Empfangslichtflecks (34) fällt,
**dadurch gekennzeichnet,**
**dass** die Verarbeitungskanäle einen rechten Flankenkanal (40), auf dessen zugeordnete Gruppe von Lichtempfangselementen (28) ein rechter Teil des Empfangslichtflecks (34) fällt, sowie einen linken Flankenkanal (38) aufweisen, auf dessen zugeordnete Gruppe von Lichtempfangselementen (28) ein linker Teil des Empfangslichtflecks (34) fällt, und dass die dem Zentralkanal (36) und den Flankenkanälen (38, 40) zugeordneten Lichtempfangselemente (28) den Empfangslichtfleck (34) in dem Sinne vollständig und genau abdecken, dass jedes Lichtempfangselement (28), das einen Teil des Empfangslichtflecks (34) registriert, einem der drei Verarbeitungskanäle zugeordnet ist, und kein Lichtempfangselement (28), das einem der drei Verarbeitungskanäle zugeordnet ist, lediglich Hintergrundlicht empfängt.

2. Sensor (10) nach Anspruch 1,
wobei die Empfangssignale der Verarbeitungskanäle analog zusammengeführt sind.

3. Sensor (10) nach Anspruch 1 oder 2,
wobei der Zentralkanal (36) die höchste Auflösung aufweist, insbesondere die dem Zentralkanal (36) zugeordnete Gruppe von Lichtempfangselementen (28) nur ein einziges Lichtempfangselement (28) aufweist.

4. Sensor (10) nach einem der vorhergehenden Ansprüche,
wobei die Steuer- und Auswertungseinheit (36) dafür ausgebildet ist, den Zentralkanal (36) und die Flankenkanäle (38, 40) zum Empfangslichtfleck (34) auszurichten, indem ein Pegel des linken Flankenkanals (38) und des rechten Flankenkanals (40) verglichen wird und im Falle eines über eine Toleranzschwelle hinausgehenden Unterschieds der Zentralkanal (36) und die Flankenkanäle (38, 40) durch Zuordnung anderer Lichtempfangselemente (28) in Richtung des kleineren Pegels verschoben werden, um die Flankenkanäle (38, 40) auszubalancieren, wobei eine ausgleichende Verschiebung in Verschieberichtung mindestens ein Lichtempfangselement (28) hinzufügt und gegen die Verschiebungsrichtung mindestens ein Lichtempfangselement (28) wegnimmt.

5. Sensor (10) nach Anspruch 4,
wobei die Steuer- und Auswertungseinheit (30) dafür ausgebildet ist, um eine konstante Anzahl von Lichtempfangselementen (28) zu verschieben.

6. Sensor (10) nach Anspruch 4 oder 5,
wobei die Steuer- und Auswertungseinheit (30) dafür ausgebildet ist, um eine Anzahl von Lichtempfangselementen (28) zu verschieben, die vom Verhältnis oder Unterschied des Pegels des linken Flankenkanals (38) zu dem Pegel des rechten Flankenkanals (40) abhängt.

7. Sensor (10) nach einem der Ansprüche 4 bis 6,
wobei die Steuer- und Auswertungseinheit (30) dafür ausgebildet ist, das Ausrichten zu iterieren.

8. Sensor (10) nach einem der vorhergehenden Ansprüche,
wobei mindestens ein weiterer Verarbeitungskanal (42, 44, 46) vorgesehen ist, nämlich ein Hintergrundkanal (42, 44, 46), auf dessen zugeordnete Gruppe von Lichtempfangselementen (28) der Empfangslichtfleck (34) nicht fällt.

9. Sensor (10) nach Anspruch 8,
wobei mindestens je ein Hintergrundkanal (42, 44, 46) für einen Nahbereich und einen Fernbereich des Lichtempfängers (26) vorgesehen ist.

10. Sensor (10) nach einem der vorhergehenden Ansprüche,
wobei die Steuer- und Auswertungseinheit (30) für eine Neuaufteilung der Verarbeitungskanäle ausgebildet ist, in der zunächst unabhängig von einer Kenntnis der Lage des Empfangslichtflecks (34) auf dem Lichtempfänger (26) Gruppen von Lichtempfangselementen (28) über einen Bereich des Lichtempfängers (26) einem jeweiligen Verarbeitungskanal zugeordnet werden.

11. Sensor (10) nach Anspruch 10,
wobei die Steuer- und Auswertungseinheit (30) dafür ausgebildet ist, mittels der neu aufgeteilten Verarbeitungskanäle eine Positionsbestimmung des Empfangslichtflecks (34) vorzunehmen und damit zumindest den Zentralkanal (36) und die Flankenkanäle (38, 40) zu initialisieren.

12. Sensor (10) nach Anspruch 8 oder 9 und 10 oder 11,
wobei die Steuer- und Auswertungseinheit (40) dafür ausgebildet ist, die Pegel in dem Zentralkanal (36) und den Flankenkanälen (38, 40) einerseits und die Pegel in dem mindestens einen Hintergrundkanal (42, 44, 46) andererseits zu vergleichen, um festzustellen, ob der Empfangslichtfleck (34) in den Hintergrundkanal (42, 44, 46) gewandert ist, und gegebenenfalls eine Neuaufteilung der Verarbeitungskanäle vorzunehmen.

13. Sensor (10) nach einem der vorhergehenden Ansprüche,
wobei die Steuer- und Auswertungseinheit für eine Störfilterung in mindestens einem Verarbeitungskanal ausgebildet ist, wobei insbesondere anhand einer Beobachtung der Störumgebung ein geeigneter Zeitpunkt für eine Signalaufnahme bestimmt wird.

14. Verfahren zum Erfassen eines Objekts (20) in einem Überwachungsbereich (18) mit optischer Triangulation, bei dem Licht (16) in den Überwachungsbereich (18) ausgesandt und nach Remission an dem Objekt (20) wieder empfangen wird, wobei in einem Lichtempfänger (26) mit einer Vielzahl von zu einer Zeile angeordneten Lichtempfangselementen (28) ein jeweiliges Empfangssignal aus einem Empfangslichtfleck (34) erzeugt wird, den das remittierte Licht (22) auf dem Lichtempfänger (26) erzeugt, wobei der Auftreffort des Empfangslichtflecks (34) auf dem Lichtempfänger (26) und daraus eine Abstandsinformation bestimmt wird und wobei in mindestens drei Verarbeitungskanälen jeweilige Empfangssignale einer Gruppe von Lichtempfangselementen (28) zusammengefasst werden, um den Auftreffort anhand der in den Verarbeitungskanälen gemessenen Pegel zu bestimmen, wobei ein Verarbeitungskanal ein Zentralkanal (36) ist, auf dessen zugeordnete Gruppe von Lichtempfangselementen (28) das Zentrum des Empfangslichtflecks (34) fällt,
**dadurch gekennzeichnet,**
**dass** die Verarbeitungskanäle einen rechten Flankenkanal (40), auf dessen zugeordnete Gruppe von Lichtempfangselementen (28) ein rechter Teil des Empfangslichtflecks (34) fällt, sowie einen linken Flankenkanal (38) aufweisen, auf dessen zugeordnete Gruppe von Lichtempfangselementen (28) ein linker Teil des Empfangslichtflecks (34) fällt, und dass die dem Zentralkanal (36) und den Flankenkanälen (38, 40) zugeordneten Lichtempfangselemente (28) den Empfangslichtfleck (34) in dem Sinne vollständig und genau abdecken, dass jedes Lichtempfangselement (28), das einen Teil des Empfangslichtflecks (34) registriert, einem der drei Verarbeitungskanäle zugeordnet ist, und kein Lichtempfangselement (28), das einem der drei Verarbeitungskanäle zugeordnet ist, lediglich Hintergrundlicht empfängt.

## Claims

1. An optoelectronic sensor (10) according to the triangulation principle for detecting an object (20) in a monitoring area (18), comprising a light transmitter (12) for transmitting light (16) into the monitoring area (18), a light receiver (26) having a plurality of light-receiving elements (28) arranged in a line for generating a respective received signal from a received light spot (34), which the light (22) remitted at the object (20) generates on the light receiver (26), the light transmitter (12) and light receiver (26) forming a triangulation arrangement, as well as a control and evaluation unit (30) configured to determine the point of impact of the received light spot (34) on the light receiver (26) and to determine distance information therefrom, the control and evaluation unit (30) having at least three processing channels, in each of which reception signals from a group of light-receiving elements (28) are combined in order to determine the point of impact on the basis of the levels measured in the processing channels, including a central channel (36) on whose associated group of light-receiving elements (28) the center of the received light spot (34) impinges,
**characterized in that** the processing channels comprise a right flank channel (40), on whose associated group of light-receiving elements (28) a right part of the received light spot (34) impinges, and a left flank channel (38), on whose associated group of light-receiving elements (28) a left part of the received light spot (34) impinges, and **in that** the light-receiving elements (28) associated with the central channel (36) and the flank channels (38, 40) completely and precisely cover the receiving light spot (34) in the sense that each light-receiving element (28) which registers a part of the receiving light spot (34) is assigned to one of the three processing channels, and no light-receiving element (28) which is assigned to one of the three processing channels receives only background light.

2. The sensor (10) according to claim 1,
wherein the received signals of the processing channels are combined in an analog manner.

3. The sensor (10) according to claim 1 or 2,
wherein the central channel (36) has the highest resolution, in particular the group of light-receiving elements (28) assigned to the central channel (36) comprises only a single light-receiving element (28).

4. The sensor (10) according to any of the preceding claims,
wherein the control and evaluation unit (36) is configured to align the central channel (36) and the flank channels (38, 40) to the received light spot (34) by comparing a level of the left flank channel (38) and the right flank channel (40) and, in the event of a difference exceeding a tolerance threshold, to shift the central channel (36) and the flank channels (38, 40) in the direction of the smaller level by assigning other light-receiving elements (28) in order to balance the flank channels (38, 40), wherein a balancing shift adds at least one light-receiving element (28) in the shift direction and removes at least one light-receiving element (28) against the shift direction.

5. The sensor (10) according to claim 4,
wherein the control and evaluation unit (30) is configured to shift by a constant number of light-receiving elements (28).

6. The sensor (10) according to claim 4 or 5,
wherein the control and evaluation unit (30) is configured to shift by a number of light-receiving elements (28) that depends on the ratio or difference of the level of the left flank channel (38) to the level of the right flank channel (40).

7. The sensor (10) according to any of claims 4 to 6,
wherein the control and evaluation unit (30) is configured to iterate the alignment.

8. The sensor (10) according to any of the preceding claims,
wherein at least one further processing channel (42, 44, 46) is provided, namely a background channel (42, 44, 46), on whose associated group of light-receiving elements (28) the receiving light spot (34) does not impinge.

9. The sensor (10) according to claim 8,
wherein at least one background channel (42, 44, 46) each is provided for a near range and a far range of the light receiver (26).

10. The sensor (10) according to any of the preceding claims,
wherein the control and evaluation unit (30) is configured for a redistribution of the processing channels, in which initially groups of light-receiving elements (28) are allocated to a respective processing channel over an area of the light receiver (26) independently of a knowledge of the position of the receiving light spot (34) on the light receiver (26).

11. The sensor (10) according to claim 10,
wherein the control and evaluation unit (30) is configured to perform a position determination of the receiving light spot (34) by means of the newly divided processing channels and thus to initialize at least the central channel (36) and the flank channels (38, 40).

12. The sensor (10) according to claim 8 or 9 and 10 or 11,
wherein the control and evaluation unit (40) is configured to compare the levels in the central channel (36) and the flank channels (38, 40), on the one hand, and the levels in the at least one background channel (42, 44, 46), on the other hand, in order to determine whether the received light spot (34) has migrated into the background channel (42, 44, 46) and, if necessary, to carry out a redistribution of the processing channels.

13. The sensor (10) according to any of the preceding claims,
wherein the control and evaluation unit is configured for interference filtering in at least one processing channel, wherein in particular a suitable time for a signal recording is determined on the basis of an observation of the interference environment.

14. A method for detecting an object (20) in a monitoring area (18) with optical triangulation, wherein light (16) is transmitted into the monitoring area (18) and is received again after remission at the object (20), a respective received signal being generated in a light receiver (26) with a plurality of light-receiving elements (28) arranged in a line from a received light spot (34) which the remitted light (22) generates on the light receiver (26), wherein the impact location of the received light spot (34) on the light receiver (26) is determined and, from that, distance information, and wherein respective received signals of a group of light-receiving elements (28) are combined in at least three processing channels, in order to determine the point of impact on the basis of the levels measured in the processing channels, wherein one processing channel is a central channel (36) on whose associated group of light-receiving elements (28) the center of the received light spot (34) impinges,
**characterized in that** the processing channels comprise a right flank channel (40), on whose associated group of light-receiving elements (28) a right-hand part of the receiving light spot (34) impinges, and a left flank channel (38), on whose associated group of light-receiving elements (28) a left-hand part of the receiving light spot (34) impinges, and **in that** the light-receiving elements (28) associated with the central channel (36) and the flank channels (38, 40) completely and precisely cover the receiving light spot (34) in the sense that each light-receiving element (28) that registers a part of the receiving light spot (34) is associated with one of the three processing channels, and no light-receiving element (28) which is associated with one of the three processing channels receives only background light.

## Revendications

1. Capteur optoélectronique (10) selon le principe de triangulation pour la détection d'un objet (20) dans une zone de surveillance (18), comprenant un émetteur de lumière (12) pour émettre de la lumière (16) dans la zone de surveillance (18), un récepteur de lumière (26) avec une pluralité d'éléments de réception de lumière (28) disposés en ligne pour générer un signal de réception respectif à partir d'une tache de lumière de réception (34), que la lumière (22) émise sur l'objet (20) génère sur le récepteur de lumière (26), dans lequel l'émetteur de lumière (12) et le récepteur de lumière (26) forment un agencement de triangulation, ainsi qu'une unité de commande et d'évaluation (30) configurée pour déterminer le point d'impact de la tache de lumière de réception (34) sur le récepteur de lumière (26) et à partir de là, une information de distance, dans lequel l'unité de commande et d'évaluation (30) comporte au moins trois canaux de traitement, dans lesquels des signaux de réception respectif d'un groupe d'éléments de réception de lumière (28) sont regroupés afin de déterminer le point d'impact à l'aide des niveaux mesurés dans les canaux de traitement, avec un canal central (36) sur le groupe associé d'éléments de réception de lumière (28) duquel tombe le centre de la tache de lumière de réception (34),
**caractérisé en ce que** les canaux de traitement comprennent un canal de flanc droit (40), sur le groupe associé d'éléments de réception de lumière (28) duquel tombe une partie droite de la tache de lumière de réception (34), ainsi qu'un canal de flanc gauche (38), sur le groupe associé d'éléments de réception de lumière (28) duquel tombe une partie gauche de la tache de lumière de réception (34), et **en ce que** les éléments de réception de lumière (28) associés au canal central (36) et aux canaux de flanc (38, 40) couvrent complètement et précisément la tache de lumière de réception (34) en ce sens que chaque élément de réception de lumière (28) qui enregistre une partie de la tache de lumière de réception (34) est associé à l'un des trois canaux de traitement, et qu'aucun élément de réception de lumière (28) associé à l'un des trois canaux de traitement ne reçoit que de la lumière de fond.

2. Capteur (10) selon la revendication 1,
dans lequel les signaux de réception des canaux de traitement sont réunis de manière analogique.

3. Capteur (10) selon la revendication 1 ou 2,
dans lequel le canal central (36) comprend la résolution la plus élevée, en particulier le groupe d'éléments de réception de lumière (28) associé au canal central (36) ne comprend qu'un seul élément de réception de lumière (28).

4. Capteur (10) selon l'une des revendications précédentes,
dans lequel l'unité de commande et d'évaluation (36) est configurée pour aligner le canal central (36) et les canaux de flanc (38, 40) sur la tache de lumière de réception (34) en comparant un niveau du canal de flanc gauche (38) et du canal de flanc droit (40) et, dans le cas d'une différence dépassant un seuil de tolérance, en déplaçant le canal central (36) et les canaux de flanc (38, 40) en direction du niveau le plus faible par l'attribution d'autres éléments de réception de lumière (28) afin d'équilibrer les canaux de flanc (38, 40), dans lequel un déplacement compensatoire dans la direction du déplacement ajoute au moins un élément de réception de lumière (28) et enlève au moins un élément de réception de lumière (28) dans la direction opposée à la direction du déplacement.

5. Capteur (10) selon la revendication 4,
dans lequel l'unité de commande et d'évaluation (30) est configurée pour déplacer un nombre constant d'éléments de réception de lumière (28).

6. Capteur (10) selon la revendication 4 ou 5,
dans lequel l'unité de commande et d'évaluation (30) est configurée pour déplacer un nombre d'éléments de réception de lumière (28) qui dépend du rapport ou de la différence entre le niveau du canal de flanc gauche (38) et le niveau du canal de flanc droit (40).

7. Capteur (10) selon l'une des revendications 4 à 6,
dans lequel l'unité de contrôle et d'évaluation (30) est configurée pour itérer l'alignement.

8. Capteur (10) selon l'une des revendications précédentes,
dans lequel au moins un autre canal de traitement (42, 44, 46) est prévu, à savoir un canal d'arrière-plan (42, 44, 46), sur le groupe associé d'éléments de réception de lumière (28) duquel la tache de lumière de réception (34) n'est pas incidente.

9. Capteur (10) selon la revendication 8,
dans lequel au moins un canal d'arrière-plan (42, 44, 46) respectif est prévu pour une zone proche et une zone éloignée du récepteur de lumière (26).

10. Capteur (10) selon l'une des revendications précédentes,
dans lequel l'unité de commande et d'évaluation (30) est configurée pour une redistribution des canaux de traitement, dans laquelle, tout d'abord, indépendamment d'une connaissance de la position de la tache de lumière de réception (34) sur le récepteur de lumière (26), des groupes d'éléments de réception de lumière (28) sont attribués à un canal de traitement respectif sur une zone du récepteur de lumière (26).

11. Capteur (10) selon la revendication 10,
dans lequel l'unité de commande et d'évaluation (30) est configurée pour effectuer une détermination de la position de la tache de lumière de réception (34) au moyen des canaux de traitement nouvellement divisés et pour initialiser ainsi au moins le canal central (36) et les canaux de flanc (38, 40).

12. Capteur (10) selon la revendication 8 ou 9 et 10 ou 11,
dans lequel l'unité de commande et d'évaluation (40) est configurée pour comparer les niveaux dans le canal central (36) et les canaux de flanc (38, 40), d'une part, et les niveaux dans l'au moins un canal d'arrière-plan (42, 44, 46), d'autre part, afin de déterminer si la tache de lumière de réception (34) s'est déplacée dans le canal d'arrière-plan (42, 44, 46) et, le cas échéant, d'effectuer une redistribution des canaux de traitement.

13. Capteur (10) selon l'une des revendications précédentes,
dans lequel l'unité de commande et d'évaluation est configurée pour un filtrage d'interférence dans au moins un canal de traitement, dans lequel un moment approprié pour l'enregistrement d'un signal est déterminé en particulier à l'aide d'une observation de l'environnement d'interférence.

14. Procédé pour détecter un objet (20) dans une zone de surveillance (18) par triangulation optique, dans lequel de la lumière (16) est émise dans la zone de surveillance (18) et est reçue à nouveau après rémission sur l'objet (20), dans lequel un signal de réception respectif est généré dans un récepteur de lumière (26) avec une pluralité d'éléments de réception de lumière (28) disposés en ligne à partir d'une tache de lumière de réception (34) que la lumière émise (22) génère sur le récepteur de lumière (26), dans lequel le point d'impact de la tache de lumière de réception (34) sur le récepteur de lumière (26) est déterminé et, à partir de là, une information de distance, et dans lequel les signaux de réception respectifs d'un groupe d'éléments de réception de lumière (28) sont regroupés dans au moins trois canaux de traitement, afin de déterminer le point d'impact à l'aide des niveaux mesurés dans les canaux de traitement, dans lequel un canal de traitement est un canal central (36), le groupe associé d'éléments de réception de lumière (28) duquel tombe le centre de la tache de lumière de réception (34),
**caractérisé en ce que** les canaux de traitement comprennent un canal de flanc droit (40), sur le groupe associé d'éléments de réception de lumière (28) duquel tombe une partie droite de la tache de lumière de réception (34), ainsi qu'un canal de flanc gauche (38), sur le groupe associé d'éléments de réception de lumière (28) duquel tombe une partie gauche de la tache de lumière de réception (34), et **en ce que** les éléments de réception de lumière (28) associés au canal central (36) et aux canaux de flanc (38, 40) couvrent complètement et précisément la tache de lumière de réception (34) en ce sens que chaque élément de réception de lumière (28) qui enregistre une partie de la tache de lumière de réception (34) est associé à l'un des trois canaux de traitement, et qu'aucun élément de réception de lumière (28) associé à l'un des trois canaux de traitement ne reçoit que de la lumière de fond.
